(19) **Europäisches Patentamt**
**European Patent Office**
**Office européen des brevets**

(11) **EP 4 203 107 A1**

(12) **EUROPEAN PATENT APPLICATION**
published in accordance with Art. 153(4) EPC

(43) Date of publication:
**28.06.2023 Bulletin 2023/26**

(21) Application number: **22736910.5**

(22) Date of filing: **10.01.2022**

(51) International Patent Classification (IPC):
*H01M 4/525* (2010.01)    *H01M 4/505* (2010.01)
*H01M 10/052* (2010.01)    *H01M 4/02* (2006.01)

(52) Cooperative Patent Classification (CPC):
**H01M 4/02; H01M 4/04; H01M 4/38; H01M 4/50;**
**H01M 4/505; H01M 4/525; H01M 10/052;**
Y02E 60/10

(86) International application number:
**PCT/KR2022/000386**

(87) International publication number:
**WO 2022/149933 (14.07.2022 Gazette 2022/28)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **08.01.2021 KR 20210002838**

(71) Applicant: **Lg Chem, Ltd.**
**Seoul 07336 (KR)**

(72) Inventors:
• **JUNG, Won Sig**
  **Daejeon 34122 (KR)**
• **CHOI, Hwan Young**
  **Daejeon 34122 (KR)**
• **PARK, Hyun Ah**
  **Daejeon 34122 (KR)**
• **BAEK, Hyeon Hui**
  **Daejeon 34122 (KR)**
• **KIM, Jong Pil**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, AND POSITIVE ELECTRODE AND LITHIUM SECONDARY BATTERY COMPRISING SAME**

(57)    The present invention relates to a positive electrode active material, in which a ratio of crystalline C having a crystalline major-axis orientation degree DoA of 0.5 to 1 and a crystalline c-axis orientation degree, which is expressed as a cross product of position unit vector P' of the crystalline and c-axis rotation vector Rc of a crystal lattice of the crystalline which is obtained through Electron BackScatter Diffraction (EBSD) analysis, of less than 0.5 among total crystallines in a cross section of a positive electrode active material particle is in a range of 25% to 70%, and a positive electrode and a lithium secondary battery which include the same.

[FIG. 3]

**Description**

**TECHNICAL FIELD**

Cross-reference to Related Applications

This application claims priority from Korean Patent Application No. 10-2021-0002838, filed on January 8, 2021, the disclosure of which is incorporated by reference herein.

Technical Field

The present invention relates to a positive electrode active material, and a positive electrode and a lithium secondary battery which include the same, and more particularly, to an excellent positive electrode active material for a lithium secondary battery, which may not only improve capacity characteristics of a secondary battery when used in the secondary battery, but may also reduce an amount of gas generated during charge and discharge of the secondary battery, and a positive electrode and a lithium secondary battery which include the same.

**BACKGROUND ART**

Demand for secondary batteries as an energy source has been significantly increased as technology development and demand with respect to mobile devices and electric vehicles have recently increased. Among these secondary batteries, lithium secondary batteries having high energy density, high voltage, long cycle life, and low self-discharging rate have been commercialized and widely used.

Lithium transition metal oxides, such as lithium cobalt oxide such as $LiCoO_2$, lithium nickel oxide such as $LiNiO_2$, lithium manganese oxide such as $LiMnO_2$ or $LiMn_2O_4$, or lithium iron phosphate such as $LiFePO_4$, have been developed as a positive electrode active material of the lithium secondary battery, and, recently, lithium composite transition metal oxides including two or more types of transition metals, for example, $Li[Ni_aCo_bMn_c]O_2$, $Li[Ni_aCo_bAl_c]O_2$, and $Li[Ni_aCo_b\text{-}Mn_cAl_d]O_2$, have been developed and widely used.

The lithium transition metal oxides including two or more types of transition metals, which have been developed so far, are typically prepared in the form of a spherical secondary particle in which tens to hundreds of primary particles are aggregated, wherein physical properties, such as mobility of lithium ions or electrolyte solution impregnability, vary depending on an orientation of the primary particle or a shape (aspect ratio) of the primary particle. Accordingly, studies are being attempted to improve performance of the positive electrode active material by controlling a particle structure of positive electrode active material particles.

Korea Patent No. 10-1611784 (Patent Document 1) discloses a positive electrode active material in which a length in an a-axis direction of a primary particle is greater than a length in a c-axis direction thereof and an a-axis of the primary particle is radially arranged. In Patent Document 1, a shape of the primary particle or an orientation of the primary particle of the positive electrode active material was analyzed using a scanning electron microscope (SEM) and/or a transmission electron microscope (TEM).

However, with respect to the TEM analysis used in Patent Document 1, since information about a partial region rather than the entire particle may be obtained, there is a limitation in that it is difficult to represent characteristics of the entire positive electrode active material particle. Also, since physical properties of the positive electrode active material vary depending on a shape or orientation of a crystalline as well as the shape or orientation of the primary particle, different physical properties may be exhibited even when the shapes or orientations of the primary particles are similar.

Thus, there is a need for research on a crystalline structure of the positive electrode active material in order to develop a positive electrode active material having better characteristics.

[Prior Art Documents]

[Patent Document]

(Patent Document 1) Korean Patent No. 10-1611784

DISCLOSURE OF THE INVENTION

TECHNICAL PROBLEM

An aspect of the present invention provides a positive electrode active material, which may not only improve capacity characteristics of a secondary battery when used in the secondary battery, but may also reduce an amount of gas generated during charge and discharge of the secondary battery by including crystallines, in which orientations of a major axis and a c-axis of the crystalline satisfy a specific condition, in a specific ratio.

Another aspect of the present invention provides a positive electrode and a lithium secondary battery which include the positive electrode active material according to the present invention.

## TECHNICAL SOLUTION

According to an aspect of the present invention, there is provided a positive electrode active material for a lithium secondary battery comprising crystalline C having a crystalline major-axis orientation degree DoA represented by [Equation 1] of 0.5 to 1 and a crystalline c-axis orientation degree, which is expressed as a cross product of position unit vector P' of the crystalline and c-axis rotation vector Rc of a crystal lattice of the crystalline which is obtained through Electron BackScatter Diffraction (EBSD) analysis, of less than 0.5, wherein a ratio of the crystalline C is in a range of 25% to 70% among total crystallines in a cross section of a positive electrode active material particle

[Equation 1]

$$ DoA = \frac{\lambda_1}{\lambda_1 + \lambda_2} C_D{}^2 $$

wherein, in [Equation 1],

$\lambda_1$ is a magnitude of major-axis vector $E_I$ of the corresponding crystalline which is measured from image data obtained by scanning ion microscope analysis of a cross section of the positive electrode active material, $\lambda_2$ is a magnitude of minor-axis vector $E_{II}$ of the corresponding crystalline which is measured from the image data obtained by the scanning ion microscope analysis of the cross section of the positive electrode active material, and $C_D$ is a dot product of major-axis unit vector $E_I$' and the position unit vector P' of the corresponding crystalline.

In this case, the scanning ion microscope analysis may be performed to obtain a scanning ion microscope image by irradiating the cross section of the positive electrode active material with a focused ion beam, obtain data, which are segmented into units of crystalline from the scanning ion microscope image, by using deep learning, and calculate the DoA represented by [Equation 1] from the segmented data.

The Electron BackScatter Diffraction (EBSD) analysis may be performed to obtain EBSD Euler map data including position information and Euler angle information of each crystalline through Electron BackScatter Diffraction (EBSD) measurement of the cross section of the positive electrode active material and obtain the c-axis rotation vector Rc(x, y, z) of the crystal lattice of the crystalline by [Equation 2].

[Equation 2]

$$ \begin{bmatrix} x \\ y \\ z \end{bmatrix} = R_x(\psi)R_y(\theta)R_z(\phi)\begin{bmatrix} X \\ Y \\ Z \end{bmatrix} $$

$$ = \begin{bmatrix} cos\psi & -sin\psi & 0 \\ sin\psi & cos\psi & 0 \\ 0 & 0 & 1 \end{bmatrix}\begin{bmatrix} cos\theta & 0 & sin\theta \\ 0 & 1 & 0 \\ -sin\theta & 0 & cos\theta \end{bmatrix}\begin{bmatrix} 1 & 0 & 0 \\ 0 & cos\phi & -sin\phi \\ 0 & sin\phi & cos\phi \end{bmatrix}\begin{bmatrix} X \\ Y \\ Z \end{bmatrix} $$

$$ = \begin{bmatrix} cos\theta cos\psi & -cos\phi sin\psi + sin\phi sin\theta cos\psi & sin\phi sin\psi + cos\phi sin\theta cos\psi \\ cos\theta sin\psi & cos\phi cos\psi + sin\phi sin\theta sin\psi & -sin\phi cos\psi + cos\phi sin\theta sin\psi \\ -sin\theta & sin\phi cos\theta & cos\phi cos\theta \end{bmatrix}\begin{bmatrix} X \\ Y \\ Z \end{bmatrix} $$

In [Equation 2],

[X, Y, Z] is (0, 0, 1), and $\psi$, $\theta$, and $\phi$ are Euler angles obtained from the Euler map data.

Preferably, the positive electrode active material may further include crystalline A having a DoA of 0.5 to 1 and a crystalline c-axis orientation degree of 0.5 to 1, crystalline B having a DoA of less than 0.5 and a crystalline c-axis orientation degree of 0.5 to 1, and crystalline D having a DoA of less than 0.5 and a crystalline c-axis orientation degree of less than 0.5, wherein, among the total crystallines in the cross section of the positive electrode active material particle, a ratio of the crystalline A may be in a range of 20% or more to less than 25%, a ratio of the crystalline B may be in a range of 5% to 30%, a ratio of the crystalline C may be in a range of 25% to 70%, and a ratio of the crystalline D may be in a range of 5% to 30%.

In this case, a sum of the ratio of the crystalline A and the ratio of the crystalline C among the total crystallines in the cross section of the positive electrode active material particle may be in a range of 50% to 90%, for example, 50% to 80%.

The positive electrode active material may have a crystalline size of 70 nm to 200 nm, preferably 100 nm to 180 nm, and more preferably 100 nm to 150 nm.

Also, the positive electrode active material may have a micro strain of 0.04% to 0.25%, for example, 0.06% to 0.15%.

Furthermore, the positive electrode active material may have an average particle diameter of a primary particle of 0.05 $\mu$m to 8 $\mu$m, for example, 0.1 $\mu$m to 4 $\mu$m and may have an average particle diameter of a secondary particle of 2 $\mu$m to 25 $\mu$m, for example, 4 $\mu$m to 18 $\mu$m.

The positive electrode active material may be a lithium composite transition metal oxide represented by [Formula 1].

[Formula 1] $\quad\quad Li_x[Ni_aCo_bM^1_cM^2_d]O_{2-y}A_y$

In [Formula 1],

$M^1$ is at least one element selected from the group consisting of manganese (Mn) and aluminum (Al), $M^2$ is at least one element selected from the group consisting of tungsten (W), copper (Cu), iron (Fe), vanadium (V), chromium (Cr), titanium (Ti), zirconium (Zr), zinc (Zn), aluminum (Al), tantalum (Ta), yttrium (Y), indium (In), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), A is at least one element selected from the group consisting of fluorine (F), chlorine (Cl), bromine (Br), iodine (I), astatine (At), and sulfur (S), and $0.98 \leq x \leq 1.20$, $0 < a < 1$, $0 < b < 1$, $0 < c < 1$ $0 \leq d \leq 0.2$, and $0 \leq y \leq 0.2$.

According to another aspect of the present invention, there is provided a positive electrode including the positive electrode active material according to the present invention and a lithium secondary battery including the positive electrode.

## ADVANTAGEOUS EFFECTS

Since a positive electrode active material of the present invention includes crystallines with a high major-axis orientation and a low c-axis orientation in a specific ratio, excellent capacity characteristics and gas generation reduction characteristics may be achieved when the positive electrode active material is used in a secondary battery.

## BRIEF DESCRIPTION OF THE DRAWINGS

FIG. 1 illustrates a scanning ion microscope image of a cross section of a positive electrode active material;
FIG. 2 illustrates a process of obtaining a segmentation image by analyzing the scanning ion microscope image of the cross section of the positive electrode active material;
FIG. 3 illustrates major-axis orientations and DoA values of crystallines;
FIG. 4 illustrates an EBSD Euler map obtained by Electron BackScatter Diffraction (EBSD) analysis of a cross section of the positive electrode active material; and
FIG. 5 illustrates a c-axis orientation map of crystallines.

## BEST MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present application, the expression "crystalline" means a single crystal unit having a regular atomic arrangement. A size of the crystalline may be measured by analyzing X-ray diffraction data of a cross section of a positive electrode active material using a Rietveld refinement method. For example, the crystalline size may be obtained by performing X-ray diffraction analysis under the following conditions using an Empyrean XRD instrument by Malvern Panalytical to obtain XRD data and then processing the XRD data using a Highscore program of Malvern Panalytical. In this case, a half-value width was set to be measured using the Caglioti equation.

<X-ray diffraction analysis conditions>

X-ray source: Cu-target, 45 kV, 40 mA output, wavelength=1.54 Å
Detector: GaliPIX3D
Sample preparation: about 5 g of a sample was filled in a holder with a diameter of 2 cm and loaded on a rotation stage.
Measurement time: about 30 minutes
Measurement range: $2\theta=15° \sim 85°$

In the present application, the expression "primary particle" denotes a smallest particle unit which is distinguished as one body when a cross section of a positive electrode active material is observed through a scanning electron microscope (SEM), wherein it may be composed of a single crystalline, or may also be composed of a plurality of crystallines. In the present invention, an average particle diameter of the primary particle was measured by a method of measuring a size of each particle distinguished from cross-sectional SEM data of the positive electrode active material particles, and then calculating an arithmetic average value thereof.

In the present application, the expression "secondary particle" denotes a secondary structure formed by aggregation of a plurality of primary particles. An average particle diameter of the secondary particle may be measured using a particle size analyzer, and, in the present application, Microtrac S3500 was used as the particle size analyzer.

In the present application, "micro strain" is a value measured by Rietveld refinement analysis of X-ray diffraction data, wherein it is a value indicating a degree of deformation of a crystal lattice.

A ratio (%) of each crystalline in the present application denotes (the number of the corresponding crystallines /the total number of crystallines present in a cross section of positive electrode active material particle) $\times$ 100.

Hereinafter, the present invention will be described in detail.

As a result of a significant amount of research conducted into developing a positive electrode active material which may not only improve capacity characteristics of a secondary battery when used in the secondary battery, but may also reduce an amount of gas generated during charge and discharge of the secondary battery, the present inventors have found that capacity characteristics and gas generation reduction characteristics of the secondary battery may be improved when a ratio of crystallines with a high major-axis orientation and a low c-axis orientation among crystallines of the positive electrode active material satisfies a specific range, thereby leading to the completion of the present invention.

### Positive Electrode Active Material

A positive electrode active material according to the present invention is characterized in that a ratio of crystalline C having a crystalline major-axis orientation degree DoA represented by [Equation 1] of 0.5 to 1 and a crystalline c-axis orientation degree of less than 0.5 among total crystallines in a cross section of a positive electrode active material particle satisfies 25% to 70%.

$$[\text{Equation 1}]$$

$$DoA = \frac{\lambda_1}{\lambda_1 + \lambda_2} C_D{}^2$$

In [Equation 1],
$\lambda_1$ is a magnitude of major-axis vector $E_I$ of the corresponding crystalline which is measured from image data obtained by scanning ion microscope analysis of a cross section of the positive electrode active material, $\lambda_2$ is a magnitude of minor-axis vector $E_{II}$ of the corresponding crystalline which is measured from the image data obtained by the scanning ion microscope analysis of the cross section of the positive electrode active material, and $C_D$ is a dot product of major-axis unit vector $E_I'$ and position unit vector $P'$ of the corresponding crystalline.

First, the DoA represented by [Equation 1] will be described.

A value of the DoA expressed by [Equation 1] is for indicating an orientation of a major axis of the crystalline, wherein it may be obtained by using data which are obtained by scanning ion microscope analysis.

Specifically, after a scanning ion microscope image is obtained by irradiating the cross section of the positive electrode active material with a focused ion beam, data, which are segmented into units of crystalline from the scanning ion microscope image, are obtained by using deep learning, and the crystalline major-axis orientation degree DoA represented by [Equation 1] may be calculated from the segmented data.

Hereinafter, a method of obtaining the DoA value by scanning ion microscope analysis will be described in more detail.

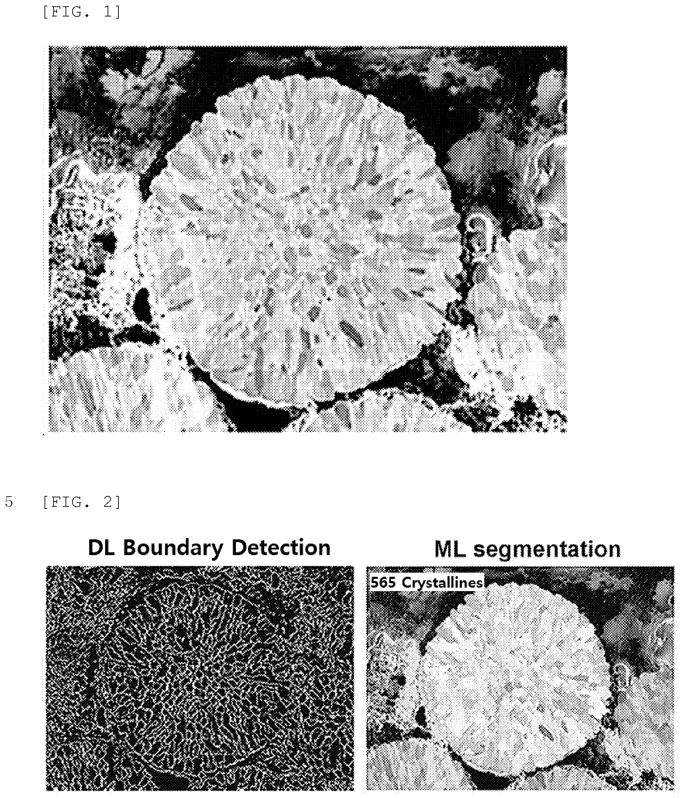

A scanning ion microscope is a device that measures a surface structure of a sample through an image of signal ions emitted when scanning a surface of the sample with an ion beam. In this case, since reflectance of the ion beam is different on different crystal planes, a cross-sectional image of a positive electrode active material particle, which is divided into units of single crystalline having the same atomic arrangement structure, may be obtained by using the scanning ion microscope. A scanning ion microscope image of the cross section of the positive electrode active material particle is illustrated in FIG. 1. Through FIG. 1, it may be confirmed that the cross-sectional image of the positive electrode active material particle is divided into units of crystalline.

Next, data segmented into units of crystalline are obtained by analyzing the scanning ion microscope image obtained as described above. In this case, the image analysis may be performed using deep learning.

A process of obtaining segmented data information by analyzing the scanning ion microscope image is illustrated in FIG. 2. As illustrated in FIG. 2, the image analysis may be performed by a method in which, for example, after boundary lines are detected from the scanning ion microscope image through deep learning, image data segmented into units of crystalline are obtained by using the boundary lines.

In this case, the boundary line detection may be performed using an AutoEncoder neural network (U-NET) algorithm, and the segmentation may be performed using a Watershed segmentation algorithm.

Since the scanning ion microscope image itself does not contain quantified information, data information segmented into units of each crystalline is obtained through deep learning in the present invention, and information, such as shape and position of the crystalline, may be quantified through this.

If the segmented data are obtained by the scanning ion microscope image analysis as described above, a position vector, a major-axis vector, and a minor-axis vector of the crystalline, which are to be measured from the data, may be obtained, and the DoA value of Equation 1 may be calculated using these.

[Equation 1]

$$DoA = \frac{\lambda_1}{\lambda_1 + \lambda_2} C_D{}^2$$

In [Equation 1],

$\lambda_1$ is a magnitude of major-axis vector $E_I$ of the corresponding crystalline which is measured from the image data obtained by the scanning ion microscope analysis of the cross section of the positive electrode active material, and, in this case, the major-axis vector $E_I$ denotes a vector in which, among vectors passing through a center of gravity of the corresponding crystalline, a sum of distances between the vector and each pixel in the crystalline is the smallest.

$\lambda_2$ is a magnitude of minor-axis vector $E_{II}$ of the corresponding crystalline which is measured from the image data obtained by the scanning ion microscope analysis of the cross section of the positive electrode active material, and, in this case, the minor-axis vector $E_{II}$ denotes a vector in which, among the vectors passing through the center of gravity of the corresponding crystalline, the sum of distances between the vector and each pixel in the crystalline is the largest.

$C_D$ is a dot product of major-axis unit vector $E_I'$ and position unit vector $P'$ of the corresponding crystalline, wherein the position unit vector $P'$ of the crystalline is a vector obtained by converting a position vector connecting the center of gravity of the corresponding crystalline to a center of the cross section of the positive electrode active material particle so that a magnitude thereof is 1, and the major-axis unit vector $E_I'$ is a vector obtained by converting the major-axis vector $E_I$ so that a magnitude thereof is 1. In this case, the center of the cross section of the positive electrode active material particle is a center of mass in a two-dimensional image (the scanning ion microscope image of the cross section of the positive electrode active material).

The DoA value calculated by [Equation 1] is a value indicating how inclined the major axis of the corresponding crystalline is with respect to a straight line passing through the center of the positive electrode active material and the center of gravity of the corresponding crystalline, wherein the closer the DoA value is to 1, the smaller the angle between the major axis of the corresponding crystalline and the straight line is, and, the closer the DoA value is to 0, the larger the angle between the major axis of the corresponding crystalline and the straight line is. That is, it may be said that the closer the DoA value is to 1, the higher the major-axis orientation of the crystalline is.

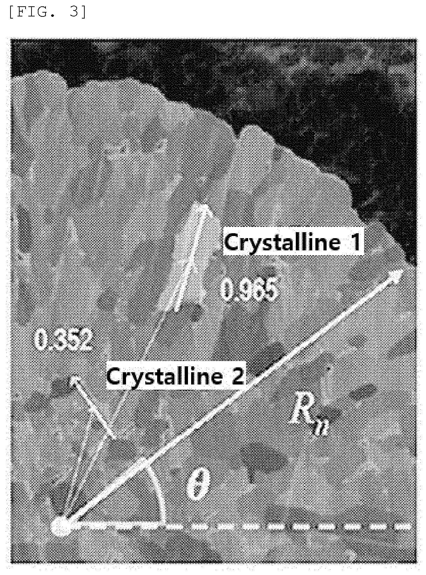

A view showing DoA values obtained by the above method and major axes of the corresponding crystallines is illustrated in FIG. 3. As illustrated in FIG. 3, with respect to crystalline 1 with a small angle between the major axis of the crystalline and the straight line passing through the center of the positive electrode active material and the center of gravity of the corresponding crystalline, DoA is 0.965, which is close to 1, but, with respect to crystalline 2 with a large angle between the major axis of the crystalline and the straight line passing through the center of the positive electrode active material and the center of gravity of the corresponding crystalline, it may be understood that DoA is small as 0.352.

A ratio of crystallines having a specific major-axis orientation degree value in the cross section of the positive electrode active material particle may be measured by mapping the above-described major-axis orientation degree information of each crystalline.

Next, the crystalline c-axis orientation degree will be described.

The crystalline c-axis orientation degree is to indicate a c-axis orientation of a crystal lattice of the crystalline, wherein it is a cross product of the position unit vector P' of the crystalline and c-axis rotation vector Rc of the crystal lattice of the crystalline which is obtained through Electron BackScatter Diffraction (EBSD) analysis.

Specifically, EBSD Euler map data including position information and Euler angle information of each crystalline are obtained through electron backscatter diffraction (EBSD) measurement of the cross section of the positive electrode active material, the c-axis rotation vector Rc of the crystal lattice is obtained by using the EBSD Euler map data, and the crystalline c-axis orientation degree may be obtained by cross product of the c-axis rotation vector Rc of the crystal lattice and the position unit vector P' of the corresponding crystalline.

Hereinafter, a method of obtaining the crystalline c-axis orientation degree according to the present invention will be described in detail.

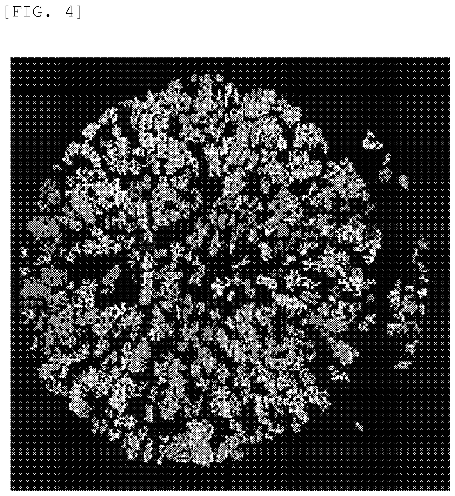

The electron backscatter diffraction analysis is a method of measuring a crystallographic phase and a crystallographic orientation using a diffraction pattern of a sample, and analyzing crystallographic information of the sample based on this. When the sample (that is, the cross section of the positive electrode active material) is tilted to have a large angle with respect to an incident direction of an electron beam in a scanning electron microscope, a diffraction pattern appears in a direction of a surface of the sample while the incident electron beam is scattered in the sample, wherein it is called Electron Backscattered Diffraction Pattern (EBSP). Since the electron backscattered diffraction pattern responds to a crystallographic orientation of a region irradiated with the electron beam, the crystallographic orientation of the sample may be accurately measured by using this and Euler map data including various information related to the crystallographic orientation of the entire sample may be obtained by an EBSD software. An Euler map obtained by electron backscatter diffraction (EBSD) analysis of the cross section of the positive electrode active material is illustrated in FIG. 4.

The EBSD Euler map data includes position vector information and Euler angle information of each crystalline. The c-axis rotation vector Rc of the crystal lattice in each crystalline may be obtained by using the Euler angle information.

The c-axis rotation vector Rc of the crystal lattice shows in which direction a c-axis of the corresponding crystalline is rotated with respect to the straight line passing through the center of the positive electrode active material and the center of gravity of the corresponding crystalline.

Specifically, the c-axis rotation vector Rc of the crystal lattice may be (x, y, z) which is calculated by the following [Equation 2].

[Equation 2]

$$
\begin{bmatrix} x \\ y \\ z \end{bmatrix} = R_x(\psi)R_y(\theta)R_z(\phi)\begin{bmatrix} X \\ Y \\ Z \end{bmatrix}
$$

$$
= \begin{bmatrix} \cos\psi & -\sin\psi & 0 \\ \sin\psi & \cos\psi & 0 \\ 0 & 0 & 1 \end{bmatrix}\begin{bmatrix} \cos\theta & 0 & \sin\theta \\ 0 & 1 & 0 \\ -\sin\theta & 0 & \cos\theta \end{bmatrix}\begin{bmatrix} 1 & 0 & 0 \\ 0 & \cos\phi & -\sin\phi \\ 0 & \sin\phi & \cos\phi \end{bmatrix}\begin{bmatrix} X \\ Y \\ Z \end{bmatrix}
$$

$$
= \begin{bmatrix} \cos\theta\cos\psi & -\cos\phi\sin\psi + \sin\phi\sin\theta\cos\psi & \sin\phi\sin\psi + \cos\phi\sin\theta\cos\psi \\ \cos\theta\sin\psi & \cos\phi\cos\psi + \sin\phi\sin\theta\sin\psi & -\sin\phi\cos\psi + \cos\phi\sin\theta\sin\psi \\ -\sin\theta & \sin\phi\cos\theta & \cos\phi\cos\theta \end{bmatrix}\begin{bmatrix} X \\ Y \\ Z \end{bmatrix}
$$

**EP 4 203 107 A1**

In [Equation 2], [X, Y, Z] is (0, 0, 1), and $\psi$, $\theta$, and $\phi$ are Euler angles of each crystalline which are obtained from the Euler map data.

A crystalline orientation degree may be obtained by using the c-axis rotation vector Rc of the crystal lattice, which is obtained as described above, and the position vector information of each crystalline which is included in the Euler map data. Specifically, the crystalline orientation degree may be quantified as a value obtained by cross product of the c-axis rotation vector Rc of the crystal lattice and the position unit vector P' of the crystalline.

In this case, the position unit vector P' denotes one in which a position vector of the corresponding crystalline is converted so that a magnitude thereof is 1. For example, if the position vector of the corresponding crystalline is (a, b, 0), the position unit vector becomes ( $\frac{a}{\sqrt{a^2+b^2}}$ , $\frac{b}{\sqrt{a^2+b^2}}$ , 0) .

The cross product value of the position unit vector P' and the c-axis rotation vector Rc of the crystal lattice is a numerical value showing the c-axis orientation degree of the corresponding crystalline in the positive electrode active material particle. Specifically, in a case in which the cross product value of the position unit vector P' and the c-axis rotation vector Rc of the crystal lattice is 1, it means that the c-axis of the corresponding crystalline is disposed perpendicular to the straight line passing through the center of the positive electrode active material and the center of gravity of the corresponding crystalline, and, in a case in which the cross product value is 0, it means that the c-axis of the corresponding crystalline is disposed horizontally with respect to the straight line.

In the positive electrode active material, mobility of lithium ions when moving along a direction perpendicular to the c-axis is more than 10 times faster than that when moving in a c-axis direction. Thus, a lithium path is formed along the direction perpendicular to the c-axis. Also, since a movement distance of lithium is minimized when the lithium path is formed parallel to the straight line passing through the center of the positive electrode active material and the center of gravity of the corresponding crystalline, lithium conductivity is improved. Therefore, it may be considered that the closer the cross product value of the position unit vector P' and the c-axis rotation vector Rc of the crystal lattice is to 1, the better the c-axis orientation of the corresponding crystalline is.

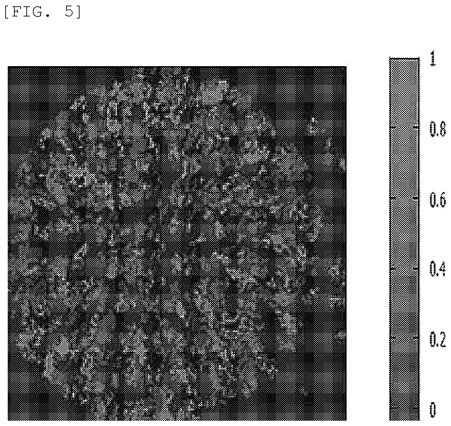

When the c-axis orientation degree of each crystalline, which is obtained as described above, is combined, the c-axis orientation degree of the total crystallines in the cross section of the positive electrode active material particle may be obtained. A c-axis orientation map of the crystallines of the positive electrode active material, which is obtained by combining the c-axis orientation degree of each crystalline, is illustrated in FIG. 5. In FIG. 5, it means that the closer the color is to red, the better the c-axis orientation is, and the closer the color is to blue, the poorer the c-axis orientation is. If the c-axis orientation map as described above is used, a ratio of crystallines satisfying a c-axis orientation condition in the cross section of the positive electrode active material particle may be obtained.

According to the study of the present inventors, a ratio of crystallines (hereinafter, referred to as crystalline C) having a crystalline major-axis orientation degree DoA represented by [Equation 1] of 0.5 to 1 and a crystalline c-axis orientation degree of less than 0.5 among total crystallines in the cross section of the positive electrode active material particle may be in a range of 25% to 70%, preferably 25% to 60%, and more preferably 30% to 65%, for example, 30% to 45%. When the ratio of the crystalline C satisfies the above range, it was found that excellent capacity characteristics and gas generation reduction characteristics may be achieved. In a case in which the ratio of the crystalline C is less than 25%, an effect of improving the capacity characteristics and gas generation characteristics may not be obtained, and, in a case in which the ratio of the crystalline C is greater than 70%, life characteristics are not only degraded, but the effect of improving the gas generation characteristics may not be obtained.

In addition to the crystalline C, the positive electrode active material according to the present invention may further include a crystalline (hereinafter, referred to as crystalline A) having a crystalline c-axis orientation degree of 0.5 to 1 and a crystalline major-axis orientation degree DoA of 0.5 to 1, a crystalline (hereinafter, referred to as crystalline B) having a crystalline c-axis orientation degree of 0.5 to 1 and a crystalline major-axis orientation degree DoA of less than 0.5, and a crystalline (hereinafter, referred to as crystalline D) having a crystalline c-axis orientation degree of less than 0.5 and a crystalline major-axis orientation degree DoA of less than 0.5, wherein, among the total crystallines in the cross section of the positive electrode active material particle, a ratio of the crystalline A may be in a range of 20% or more to less than 25%, a ratio of the crystalline B may be in a range of 5% to 30%, a ratio of the crystalline C may be in a range of 25% to 70%, and a ratio of the crystalline D may be in a range of 5% to 30%.

In this case, it is desirable that a sum of the ratio of the crystalline A and the ratio of the crystalline C among the total crystallines in the cross section of the positive electrode active material particle is in a range of 50% to 90%, particularly 50% to 80%, and more particularly 55% to 65%. When the ratios of the crystalline A and the crystalline C satisfy the above range, a better effect may be obtained in terms of the capacity characteristics and life characteristics, particularly, life characteristics.

Since the ratio of the crystallines of the positive electrode active material varies depending on a composition of a precursor used during the preparation of the positive electrode active material, crystalline shape and orientation of the precursor, a type of doping element and/or sintering temperature, a positive electrode active material satisfying the ratio of the crystallines of the present invention may be prepared by appropriately adjusting the type of the precursor, the doping element, and the sintering temperature.

The positive electrode active material according to the present invention may be a lithium composite transition metal oxide containing two or more transition metals, and, for example, may be a lithium composite transition metal oxide represented by [Formula 1] below.

$$[\text{Formula 1}] \qquad \text{Li}_x[\text{Ni}_a\text{Co}_b\text{M}^1{}_c\text{M}^2{}_d]\text{O}_{2-y}\text{A}_y$$

In [Formula 1], $M^1$ may be at least one element selected from the group consisting of manganese (Mn) and aluminum (Al).

$M^2$ may be at least one element selected from the group consisting of tungsten (W), copper (Cu), iron (Fe), vanadium (V), chromium (Cr), titanium (Ti), zirconium (Zr), zinc (Zn), aluminum (Al), tantalum (Ta), yttrium (Y), indium (In), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo) .

Also, A may be at least one element selected from the group consisting of fluorine (F), chlorine (Cl), bromine (Br), iodine (I), astatine (At), and sulfur (S).

x represents a ratio of the number of moles of lithium (Li) to the total number of moles of transition metals, wherein x may satisfy $0.98 \leq x \leq 1.20$, preferably $0.99 \leq x \leq 1.10$, and more preferably $1.0 \leq x \leq 1.10$.

a represents a ratio of the number of moles of nickel (Ni) to the total number of moles of transition metals, wherein a may satisfy $0 < a < 1$, preferably $0.3 \leq a < 1$, and more preferably $0.6 \leq a < 1$, for example, $0.8 \leq a < 1$.

b represents a ratio of the number of moles of cobalt (Co) to the total number of moles of transition metals, wherein b may satisfy $0 < b < 1$, preferably $0 < b < 0.7$, and more preferably $0 < b < 0.4$, for example, $0 < b < 0.2$.

c represents a ratio of the number of moles of $M^1$ to the total number of moles of transition metals, wherein c may satisfy $0 < c < 1$, preferably $0 < c < 0.7$, and more preferably $0 < c < 0.4$, for example, $0 < c < 0.2$.

d represents a ratio of the number of moles of $M^2$ to the total number of moles of transition metals, wherein d may satisfy $0 \leq d \leq 0.2$, preferably $0 \leq d \leq 0.15$, and more preferably $0 \leq d \leq 0.10$.

y represents a ratio of the number of moles of element A substituted at an oxygen site, wherein y may satisfy $0 \leq y \leq 0.2$, preferably $0 \leq y \leq 0.15$, and more preferably $0 \leq y \leq 0.10$.

The positive electrode active material may have a crystalline size of 70 nm to 200 nm, preferably 100 nm to 180 nm, and more preferably 100 nm to 150 nm. If the crystalline size is excessively increased, a rock salt phase may be formed to degrade resistance characteristics and life characteristics, and, if the crystalline size is excessively decreased, a contact area with an electrolyte solution may be increased to quickly cause degradation.

Also, the positive electrode active material may have a micro strain of 0.04% to 0.25%, for example, 0.06% to 0.15%. If the micro strain is excessively large, the life characteristics are degraded, and, if the micro strain is excessively small, lithium ion mobility is reduced.

Furthermore, the positive electrode active material may have an average particle diameter of a primary particle of 0.05 $\mu$m to 4 $\mu$m, for example, 0.1 $\mu$m to 2 $\mu$m. If the average particle diameter of the primary particle is excessively large, the rock salt phase may be formed to degrade the resistance characteristics and life characteristics, and, if the average particle diameter of the primary particle is excessively small, the contact area with the electrolyte solution may be increased to quickly cause degradation.

Also, the positive electrode active material may have an average particle diameter of a secondary particle of 2 $\mu$m to 25 $\mu$m, for example, 4 $\mu$m to 18 $\mu$m. When the average particle diameter of the secondary particle satisfies the above range, breakage of the positive electrode active material particle in a rolling process or a decrease in processability during preparation of a slurry may be prevented.

## Positive Electrode

Next, a positive electrode according to the present invention will be described.

The positive electrode includes a positive electrode active material according to the present invention. Specifically, the positive electrode includes a positive electrode collector and a positive electrode active material layer formed on the positive electrode collector, wherein the positive electrode active material layer includes a positive electrode active material according to the present invention.

In this case, since the positive electrode active material is the same as described above, detailed descriptions thereof will be omitted, and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent, a binder, and a dispersant in addition to the positive electrode active material, if necessary.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The dispersant may include an aqueous dispersant or an organic dispersant such as N-methyl-2-pyrrolidone.

The positive electrode may be prepared according to a typical method of preparing a positive electrode except that the above-described positive electrode active material is used. Specifically, a positive electrode slurry composition, which is prepared by dissolving or dispersing the positive electrode active material as well as optionally the binder, the conductive agent, and the dispersant, if necessary, in a solvent, is coated on the positive electrode collector, and the positive electrode may then be prepared by drying and rolling the coated positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the positive electrode slurry composition on a separate support and then laminating a film separated from the support on the positive electrode collector.

## Secondary Battery

Furthermore, in the present invention, an electrochemical device including the positive electrode may be prepared. The electrochemical device may specifically be a battery or a capacitor, and, for example, may be a lithium secondary battery.

The lithium secondary battery may specifically include a positive electrode, a negative electrode disposed to face the positive electrode, a separator disposed between the positive electrode and the negative electrode, and an electrolyte. Since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer, as an example, may be prepared by coating a negative electrode slurry composition, which is prepared by dissolving or dispersing optionally the binder and the conductive agent as well as the negative electrode active material in a solvent, on the negative electrode collector and drying the coated negative electrode collector, or may be prepared by casting the negative electrode slurry composition on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon groupand may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, performance of an electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN-, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, Lil, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

As described above, the lithium secondary battery including the positive electrode active material according to the present invention stably exhibits excellent capacity characteristics and gas generation reduction characteristics, and may be suitably used in various fields such as portable devices, such as mobile phones, notebook computers, and digital cameras, and electric vehicles.

**MODE FOR CARRYING OUT THE INVENTION**

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

**Examples**

**Preparation Example 1 - Preparation of Positive Electrode Active Material Precursor A**

$NiSO_4$, $CoSO_4$, and $MnSO_4$ were mixed in distilled water in amounts such that a molar ratio of nickel:cobalt:manganese was 92:4:4 to prepare a transition metal aqueous solution with a concentration of 2.4 M.

Subsequently, after deionized water was put into a reactor, dissolved oxygen in the water was removed by purging the reactor with nitrogen gas to create a non-oxidizing atmosphere in the reactor. Thereafter, 7.96 M NaOH was added so that a pH in the reactor was maintained at 11.9.

Thereafter, while the transition metal aqueous solution, a NaOH aqueous solution, and a $NH_4OH$ aqueous solution were added to the reactor at rates of 850 mL/h, 510 mL/h, and 160 mL/h, respectively, a reaction was performed for 40 hours at a reaction temperature of 50°C, a pH of 11.4, and a stirring speed of 600 rpm to prepare positive electrode active material precursor A having an average particle diameter ($D_{50}$) of 13 $\mu$m and represented by $Ni_{0.92}Co_{0.04}Mn_{0.04}(OH)_2$.

**Preparation Example 2 - Preparation of Positive Electrode Active Material Precursor B**

Positive electrode active material precursor B having an average particle diameter ($D_{50}$) of 4 $\mu$m and represented by $Ni_{0.92}Co_{0.04}Mn_{0.04}(OH)_2$ was prepared in the same manner as in Preparation Example 1 except that a co-precipitation reaction was performed for 12 hours.

**Example 1**

After the positive electrode active material precursor A prepared by Preparation Example 1 and LiOH were mixed such that a molar ratio of Li:transition metal was 1.05:1 and $Nb_2O_3$ was further mixed therewith so that a molar ratio of Nb:transition metal was 0.00125:1, sintering was performed at 760°C for 13 hours to prepare $Li[Ni_{0.92}Co_{0.04}M_{0.04}]_{0.99875}Nb_{0.00125}O_2$.

Then, after the $Li[Ni_{0.92}Co_{0.04}Mn_{0.04}]_{0.99875}Nb_{0.00125}O_2$ was washed with water and dried, 500 ppm boric acid was mixed and a heat treatment was performed at 300°C to prepare B-coated positive electrode active material 1.

**Example 2**

Positive electrode active material 2 was prepared in the same manner as in Example 1 except that $Nb_2O_3$ was further mixed so that a molar ratio of Nb:transition metal was 0.0025:1.

**Comparative Example 1**

The positive electrode active material precursor A prepared by Preparation Example 1 and LiOH were mixed such that a molar ratio of Li:transition metal was 1.05:1 and sintering was performed at 760°C for 13 hours to prepare $Li[Ni_{0.92}Co_{0.04}Mn_{0.04}]O_2$.

Then, after the $Li[Ni_{0.92}Co_{0.04}Mn_{0.04}]O_2$ was washed with water and dried, 500 ppm boric acid was mixed and a heat treatment was performed at 300°C to prepare B-coated positive electrode active material 3.

**Comparative Example 2**

After the positive electrode active material precursor A prepared by Preparation Example 1 and LiOH were mixed such that a molar ratio of Li:transition metal was 1.05:1 and $Ta_2O_3$ was further mixed therewith so that a molar ratio of Ta:transition metal was 0.0025:1, sintering was performed at 760°C for 13 hours to prepare $Li[Ni_{0.92}Co_{0.04}Mn_{0.04}]_{0.9975}Ta_{0.0025}O_2$.

Then, after the $Li[Ni_{0.92}Co_{0.04}Mn_{0.04}]_{0.9975}Ta_{0.0025}O_2$ was washed with water and dried, 500 ppm boric acid was mixed and a heat treatment was performed at 300°C to prepare B-coated positive electrode active material 4.

**Comparative Example 3**

After the positive electrode active material precursor B prepared by Preparation Example 2 and LiOH were mixed such that a molar ratio of Li:transition metal was 1.05:1 and $Nb_2O_3$ was further mixed therewith so that a molar ratio of Nb:transition metal was 0.0025:1, sintering was performed at 770°C for 13 hours to prepare $Li[Ni_{0.92}Co_{0.04}Mn_{0.04}]_{0.9975}Nb_{0.0025}O_2$.

Then, after the $Li[Ni_{0.92}Co_{0.04}Mn_{0.04}]_{0.9975}Nb_{0.0025}O_2$ was washed with water and dried, 500 ppm boric acid was mixed and a heat treatment was performed at 300°C to prepare B-coated positive electrode active material 5.

**Experimental Example 1: Positive Electrode Active Material Analysis**

After each of the positive electrode active materials 1 to 5 prepared by Examples 1 and 2 and Comparative Examples 1 to 3 was cross-sectioned using an ion milling system (Hitachi, IM4000), the above-described scanning ion microscope analysis and electron backscatter diffraction (EBSD) analysis were performed to measure ratios of crystallines A, B, C, and D.

Also, XRD data of the positive electrode active materials 1 to 5 prepared by Examples 1 and 2 and Comparative Examples 1 to 3 were measured using an Empyrean instrument by Malvern Panalytical, and crystalline size and micro strain of each positive electrode active material were measured using a Rietveld refinement method built in a Highscore program of Malvern Panalytical.

Measurement results are presented in Table 1 below.

[Table 1]

| | Crystalline size (nm) | Micro stain (%) | Crystalline ratio (%) | | | |
|---|---|---|---|---|---|---|
| | | | Crystalli ne A | Crystalli ne B | Crystalli ne C | Crystalli ne D |
| Example 1 | 132.1 | 0.085 | 23.2 | 21.6 | 34.5 | 20.7 |
| Example 2 | 127.4 | 0.091 | 20.2 | 20 | 40.1 | 19.7 |
| Comparative Example 1 | 143.7 | 0.072 | 33.2 | 21.6 | 24.7 | 20.5 |
| Comparative Example 2 | 125.8 | 0.068 | 34.6 | 21.2 | 22.1 | 22.1 |
| Comparative Example 3 | 146.1 | 0.067 | 11.6 | 7.5 | 70.9 | 9 |

**Experimental Example 2: Battery Characteristics Evaluation**

Each of the positive electrode active materials prepared in Examples 1 and 2 and Comparative Examples 1 to 3, a conductive agent (Denka Black), and a binder (PVDF) were mixed in an N-methyl-2-pyrrolidone (NMP) solvent at a weight ratio of 97.5:1:1.5 to prepare a positive electrode slurry. One surface of an aluminum current collector was coated with the positive electrode slurry, dried, and then rolled to prepare a positive electrode.

A lithium metal electrode was used as a negative electrode.

Each lithium secondary battery was prepared by preparing an electrode assembly by disposing a separator between the positive electrode and the negative electrode, disposing the electrode assembly in a battery case, and then injecting an electrolyte solution. In this case, as the electrolyte solution, an electrolyte solution, in which 1 M $LiPF_6$ was dissolved in an organic solvent in which ethylene carbonate:ethyl methyl carbonate:diethyl carbonate were mixed in a volume ratio of 3:3:4, was used.

Then, each of the secondary batteries was charged at a constant current of 0.1 C to 4.2 V at 25°C. Thereafter, each secondary battery was discharged at a constant current of 0.1 C to 3 V to measure initial charge capacity and initial discharge capacity, and the results thereof are presented in Table 2 below.

Also, each of the positive electrode active materials prepared in Examples 1 and 2 and Comparative Examples 1 to 3, a conductive agent (Denka Black), and a binder (PVDF) were mixed in an N-methyl-2-pyrrolidone (NMP) solvent at a weight ratio of 97.5:1:1.5 to prepare a positive electrode slurry. One surface of an aluminum current collector was coated with the positive electrode slurry, dried, and then rolled to prepare a positive electrode.

Next, a negative electrode active material (natural graphite), a conductive agent (carbon black), and a binder (PVDF) were mixed in an N-methyl-2-pyrrolidone (NMP) solvent at a weight ratio of 95.6:1:3.4 to prepare a negative electrode slurry. One surface of a copper current collector was coated with the negative electrode slurry, dried, and then rolled to prepare a negative electrode.

Each lithium secondary battery was prepared by preparing an electrode assembly by disposing a separator between the positive electrode and the negative electrode, disposing the electrode assembly in a battery case, and then injecting an electrolyte solution. In this case, as the electrolyte solution, an electrolyte solution was used in which 1 M $LiPF_6$ was dissolved in an organic solvent in which ethylene carbonate and ethylmethyl carbonate were mixed in a volume ratio of 3:7.

Then, each of the secondary batteries was charged at a constant current of 0.1 C to 4.2 V at 25°C. Thereafter, each secondary battery was discharged at a constant current of 0.1 C to 3 V (1 cycle), and, thereafter, 200 cycles of charge and discharge were performed in a range of 3 V to 4.2 V at a constant current of 0.33 C at 45°C. In this case, capacity retention (%) was calculated by dividing discharge capacity in a 200th cycle by discharge capacity in a 1st cycle and then multiplying by 100, and the results thereof are presented in Table 2 below.

The secondary battery charged and discharged for 1 cycle and the secondary battery charged and discharged for 200 cycles were punctured in a vacuum chamber to discharge gas inside the batteries, respectively, the gas was collected in the vacuum chamber, and a gas generation amount was quantitatively analyzed for the gas inside the chamber using a gas chromatography-flame ionization detector (GC-FID). Then, the gas generation amount from the secondary battery charged and discharged for 200 cycles was divided by the gas generation amount from the secondary battery charged and discharged for 1 cycle and then multiplied by 100 to calculate a gas increase amount (%), and the results thereof are presented in Table 2 below.

[Table 2]

| | Initial capacity (mAh/g) | | Capacity retention (%) | Gas increase amount (%) |
|---|---|---|---|---|
| | Charge capacity | Discharge capacity | | |
| Example 1 | 243.7 | 227.1 | 90.5 | 130 |
| Example 2 | 241.8 | 225.4 | 90.2 | 122 |
| Comparative Example 1 | 241.1 | 224.1 | 89.1 | 214 |
| Comparative Example 2 | 235.5 | 223.1 | 90.4 | 252 |
| Comparative Example 3 | 240.1 | 216.7 | 82.1 | 312 |

As illustrated in [Table 2], it may be confirmed that capacity characteristics and gas generation reduction characteristics of the secondary batteries using the positive electrode active materials of Examples 1 and 2, in which the ratio of the crystalline C satisfied the range of the present invention, were better than those of the secondary batteries using the positive electrode active materials of Comparative Examples 1 to 3. In addition, it may be confirmed that life characteristics of the secondary batteries using the positive electrode active materials of Examples 1 and 2 were equal to or better than those of the secondary batteries using the positive electrode active materials of Comparative Examples 1 to 3.

**Claims**

1. A positive electrode active material comprises:

   crystalline C having a crystalline major-axis orientation degree DoA represented by Equation 1 of 0.5 to 1 and a crystalline c-axis orientation degree of less than 0.5,
   wherein among total crystallines in a cross section of a positive electrode active material particle, a ratio of the crystalline C is in a range of 25% to 70%:

   [Equation 1]

   $$DoA = \frac{\lambda_1}{\lambda_1 + \lambda_2} C_D{}^2$$

   wherein,
   $\lambda_1$ is a magnitude of major-axis vector $E_I$ of the corresponding crystalline which is measured from image data obtained by scanning ion microscope analysis of a cross section of the positive electrode active material,
   $\lambda_2$ is a magnitude of minor-axis vector $E_{II}$ of the corresponding crystalline which is measured from the image data obtained by the scanning ion microscope analysis of the cross section of the positive electrode active material, and
   $C_D$ is a dot product of major-axis unit vector $E_I'$ and the position unit vector $P'$ of the corresponding crystalline, and wherein the crystalline C-axis orientation degree is expressed as a cross product of position unit vector $P'$ of the crystalline and c-axis rotation vector Rc of a crystal lattice of the crystalline which is obtained through Electron BackScatter Diffraction (EBSD) analysis.

2. The positive electrode active material of claim 1, wherein the scanning ion microscope analysis is performed to obtain a scanning ion microscope image by irradiating the cross section of the positive electrode active material with a focused ion beam, obtain data, which are segmented into units of crystalline from the scanning ion microscope image, by using deep learning, and calculate the DoA represented by Equation 1 from the segmented data.

3. The positive electrode active material of claim 1, wherein the Electron BackScatter Diffraction (EBSD) analysis is performed to obtain EBSD Euler map data including position information and Euler angle information of each crystalline through Electron BackScatter Diffraction (EBSD) measurement of the cross section of the positive electrode active material and obtain the c-axis rotation vector Rc(x, y, z) of the crystal lattice of the crystalline by Equation 2:

[Equation 2]

$$\begin{bmatrix} x \\ y \\ z \end{bmatrix} = R_x(\psi)R_y(\theta)R_z(\phi)\begin{bmatrix} X \\ Y \\ Z \end{bmatrix}$$

$$= \begin{bmatrix} \cos\psi & -\sin\psi & 0 \\ \sin\psi & \cos\psi & 0 \\ 0 & 0 & 1 \end{bmatrix}\begin{bmatrix} \cos\theta & 0 & \sin\theta \\ 0 & 1 & 0 \\ -\sin\theta & 0 & \cos\theta \end{bmatrix}\begin{bmatrix} 1 & 0 & 0 \\ 0 & \cos\phi & -\sin\phi \\ 0 & \sin\phi & \cos\phi \end{bmatrix}\begin{bmatrix} X \\ Y \\ Z \end{bmatrix}$$

$$= \begin{bmatrix} \cos\theta\cos\psi & -\cos\phi\sin\psi + \sin\phi\sin\theta\cos\psi & \sin\phi\sin\psi + \cos\phi\sin\theta\cos\psi \\ \cos\theta\sin\psi & \cos\phi\cos\psi + \sin\phi\sin\theta\sin\psi & -\sin\phi\cos\psi + \cos\phi\sin\theta\sin\psi \\ -\sin\theta & \sin\phi\cos\theta & \cos\phi\cos\theta \end{bmatrix}\begin{bmatrix} X \\ Y \\ Z \end{bmatrix}$$

wherein,
[X, Y, Z] is (0, 0, 1), and $\psi$, $\theta$, and $\phi$ are Euler angles obtained from the Euler map data.

4. The positive electrode active material of claim 1, further comprising:

   crystalline A having a DoA of 0.5 to 1 and a crystalline c-axis orientation degree of 0.5 to 1,
   crystalline B having a DoA of less than 0.5 and a crystalline c-axis orientation degree of 0.5 to 1, and
   crystalline D having a DoA of less than 0.5 and a crystalline c-axis orientation degree of less than 0.5,
   wherein, among the total crystallines in the cross section of the positive electrode active material particle, a ratio of the crystalline A is in a range of 20% or more to less than 25%, a ratio of the crystalline B is in a range of 5% to 30%, a ratio of the crystalline C is in a range of 25% to 70%, and a ratio of the crystalline D is in a range of 5% to 30%.

5. The positive electrode active material of claim 4, wherein a sum of the ratio of the crystalline A and the ratio of the crystalline C among the total crystallines in the cross section of the positive electrode active material particle is in a range of 50% to 90%.

6. The positive electrode active material of claim 1, wherein the positive electrode active material has a crystalline size of 70 nm to 200 nm.

7. The positive electrode active material of claim 1, wherein the positive electrode active material has a micro strain of 0.04% to 0.25%.

8. The positive electrode active material of claim 1, wherein the positive electrode active material has an average particle diameter of a primary particle of 0.05 um to 8 um.

9. The positive electrode active material of claim 1, wherein the positive electrode active material has an average particle diameter of a secondary particle of 2 um to 25 um.

10. The positive electrode active material of claim 1, wherein the positive electrode active material is a lithium composite transition metal oxide represented by Formula 1:

   [Formula 1]　　　　$Li_x[Ni_aCo_bM^1_cM^2_d] O_{2-y}A_y$

   wherein,

   $M^1$ is at least one element selected from the group consisting of manganese (Mn) and aluminum (Al),
   $M^2$ is at least one element selected from the group consisting of tungsten (W), copper (Cu), iron (Fe), vanadium (V), chromium (Cr), titanium (Ti), zirconium (Zr), zinc (Zn), aluminum (Al), tantalum (Ta), yttrium (Y), indium (In), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo),

A is at least one element selected from the group consisting of fluorine (F), chlorine (Cl), bromine (Br), iodine (I), astatine (At), and sulfur (S), and

$0.98 \leq x \leq 1.20$, $0 < a < 1$, $0 < b < 1$, $0 < c < 1$, $0 \leq d \leq 0.2$, and $0 \leq y \leq 0.2$.

11. A positive electrode comprising the positive electrode active material of any one of claims 1 to 10.

12. A lithium secondary battery comprising the positive electrode of claim 11.

[FIG. 1]

[FIG. 2]

**DL Boundary Detection**          **ML segmentation**

[FIG. 3]

[FIG. 4]

[FIG. 5]

## INTERNATIONAL SEARCH REPORT

| International application No. |
|---|
| **PCT/KR2022/000386** |

**A. CLASSIFICATION OF SUBJECT MATTER**

**H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/525(2010.01); C01G 53/00(2006.01); H01J 37/252(2006.01); H01J 49/46(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive electrode active material), 결정립(crystalline), 장축 배향도 (long-axis orientation), c축 배향도(c-axis orientation), 전자후방산란회절(Electron BackScatter Diffraction, EBSD), 주사이 온현미경(scanning ion microscope)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0035717 A (SUMITOMO METAL MINING CO., LTD.) 03 April 2019 (2019-04-03)<br>See claims 11, 14 and 17; paragraphs [0073] and [0074]; and figure 3. | 1-12 |
| A | JP 2013-161703 A (JX NIPPON MINING & METALS CORP.) 19 August 2013 (2013-08-19)<br>See entire document. | 1-12 |
| A | JP 2017-117529 A (ASAHI GLASS CO., LTD.) 29 June 2017 (2017-06-29)<br>See entire document. | 1-12 |
| A | US 7091484 B2 (YANAGIUCHI, K. et al.) 15 August 2006 (2006-08-15)<br>See entire document. | 1-12 |
| A | WO 2017-169129 A1 (PANASONIC INTELLECTUAL PROPERTY MANAGEMENT CO., LTD.) 05 October 2017 (2017-10-05)<br>See entire document. | 1-12 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 April 2022** | **14 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/000386**

| Patent document cited in search report | | | Publication date (day/month/year) | Patent family member(s) | | | Publication date (day/month/year) |
|---|---|---|---|---|---|---|---|
| KR | 10-2019-0035717 | A | 03 April 2019 | CN | 109803928 | A | 24 May 2019 |
| | | | | US | 2019-0248673 | A1 | 15 August 2019 |
| | | | | WO | 2018-021555 | A1 | 01 February 2018 |
| JP | 2013-161703 | A | 19 August 2013 | JP | 5876739 | B2 | 02 March 2016 |
| JP | 2017-117529 | A | 29 June 2017 | JP | 6612611 | B2 | 27 November 2019 |
| US | 7091484 | B2 | 15 August 2006 | JP | 2005-147851 | A | 09 June 2005 |
| | | | | JP | 4022512 | B2 | 19 December 2007 |
| | | | | US | 2005-0103995 | A1 | 19 May 2005 |
| WO | 2017-169129 | A1 | 05 October 2017 | CN | 109075336 | A | 21 December 2018 |
| | | | | CN | 109075336 | B | 02 July 2021 |
| | | | | JP | 6678355 | B2 | 08 April 2020 |
| | | | | US | 11005099 | B2 | 11 May 2021 |
| | | | | US | 2020-0295365 | A1 | 17 September 2020 |
| | | | | WO | 2017-169129 | A1 | 05 October 2017 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210002838

- KR 101611784